# EUROPÄISCHE PATENTSCHRIFT

(11) **EP 2 572 588 B1**
(45) Veröffentlichungstag und Bekanntmachung des Hinweises auf die Patenterteilung: **27.02.2019**
(21) Anmeldenummer: 11182783.8
(22) Anmeldetag: 26.09.2011
(51) Int. Cl.: A23G 1/04, A23G 1/20, A23G 3/02, A23G 3/20, A23G 1/00, A23G 3/00

(54) **Vorrichtung und ein Verfahren zum Verteilen fliessfähiger oder - giessfähiger Massen, insbesondere von Luftschokolade**
Device and a method for distributing flowing or self-levelling masses, in particular aerated chocolate
Dispositif et procédé de répartition de masses pouvant s'écouler ou couler, notamment du chocolat aéré

(43) Veröffentlichungstag der Anmeldung: 27.03.2013
(73) Patentinhaber: Bühler Bindler GmbH, 51702 Bergneustadt (DE)
(72) Erfinder: Altjohann, Frank, 51702 Bergneustadt (DE)
(74) Vertreter: Hepp Wenger Ryffel AG

(56) Entgegenhaltungen:
- EP-A1- 1 547 469
- DE-A1- 1 782 745
- DE-B3-102008 055 813
- US-A- 4 566 612
- US-A- 5 718 354
- US-B1- 6 758 056

## Beschreibung

Die Erfindung betrifft eine Vorrichtung und ein Verfahren zum Verteilen fliessfähiger oder - giessfähiger Massen, z.B. Schokolade, sowie eine Anbauteil zum Umrüsten einer Giessmaschine, ein Verfahren zum Umrüsten einer Giessmaschine und die Verwendung einer Vorrichtung zum Verteilen fliessfähiger oder - giessfähiger Massen.

Die Masse wird typischerweise in Öffnungen von Formplatten gefüllt, welche z.B. durch ein Transportband unterhalb eines Massebehälters vorwärts bewegt werden. Die Öffnungen, in welche die giessfähige Masse einfliesst, können in einer oder mehreren nebeneinander angeordneten Reihen auf der Formplatte vorgesehen sein.

Die Verteilung der aus dem Massebehälter fliessenden Massen erfolgt durch Dosierkanäle in Dosierelementen, z.B. Drehschieber, die in einem Grundkörper unterhalb des Vorratsbehälters in der Querrichtung zur Bewegungsachse des Transportbandes angeordnet sind.

Die Masse fliesst aus dem Massebehälter, z.B. durch eine Eintrittsöffnung des Grundkörpers, in die Dosierkänale und von dort, z.B. durch eine Austrittsöffnung des Grundkörpers, an einen Massezielort, wo die Masse in der Regel, wenn es sich zum Beispiel um Schokoladenmasse handelt, erstarren kann.

Durch die Dosierkanäle wird die Masse in der Regel mittels Pumpen vorgetrieben.

In der Regel befindet sich in Fliessrichtung unterhalb des Grundkörpers eine Giessplatte mit Gieskanälen, welche mit den Öffnungen der Formplatte korrespondieren und die Masse von den Dosierkanälen zu den Öffnungen transportieren.
Eine derartige Einrichtung ist in Form einer Giessmaschine für Schokolade und ähnliche fliessfähigen oder breiige Massen zur Verteilung solcher Massen in unterhalb des Vorratsbehälters wandernde Formmulden zum Beispiel aus DE 1782745 bekannt.
Derartige Giessmaschinen sind nicht dafür geeignet, belüftete, bzw. unter Druck stehenden Masse zu vergiessen, da die Masse unkontrolliert in den Dosierkanälen und/oder Giesskanälen expandieren würde. Belüftete, das heisst mit einem Treibgas versetzte, Massen werden in der Regel mit eigens dafür ausgelegten Maschinen vergossen, in denen die Masse unmittelbar vor dem Abfüllen in die Formplatte mit einem Gas aufgeschäumt wird. Diese Vorrichtungen sind zumeist nicht für das Vergiessen von glatten Massen geeignet. Aus der US-6,758,056 ist eine Dosiervorrichtung bekannt, welche sich zum Dosieren belüfteter und nicht belüfteter gefrorener Massen eignet. Im Folgenden wird unter einer glatten Masse eine Masse verstanden, die eine Dichte zwischen 1 kg/l und 1.5 kg/l aufweist, wohingegen eine unter Druck stehenden Masse eine Dichte vom ca. 0.4 kg/l bis 0.7 kg/l aufweist. Belüftete, unter Druck stehende fliessfähige Masse wird in einem Massebehälter unter einem Druck von etwa 6-10 Bar gehalten, wohingegen glatte Massen im Massebehälter nur den atmosphärischen Druck, bzw. ihren eigenen Gewichtsdruck, erfahren.
Es stellt sich daher die Aufgabe, die Nachteile des Bekannten zu vermeiden und eine Vorrichtung und ein Verfahren vorzustellen, mit welchen sowohl glatte, als auch unter Druck stehende Massen präzise vergossen werden können.

Die Aufgabe wird gelöst durch eine Vorrichtung zum Verteilen einer fliessfähigen Masse, insbesondere eines Verzehrguts, gemäss den Merkmalen des Anspruchs 1. Die Vorrichtung weist mindestens ein Dosierelement mit mindestens einem Dosierkanal auf, der einerseits mit einem Massebehälter und andererseits mit einem Masse-Zielort in Fluidverbindung bringbar ist. Die Vorrichtung weist ausserdem mindestens ein Verschlusselement auf, das zwischen einer ersten Position, in welcher im Wesentlichen keine Masse aus dem Dosierkanal in Richtung des Masse-Zielorts austreten kann, und einer zweiten Position, in welcher Masse aus dem Dosierkanal in Richtung des Masse-Zielorts, austreten kann, stellbar ist.

Der Dosierkanal ist somit gezielt durch das Verschlusselement verschliessbar. Damit wird sichergestellt, dass sich die zu giessenden Masse während des Dosierens nur im Dosierkanal ausbreiten kann und nicht schon beginnt, aus dem Dosierkanal auszutreten, bevor mit Vergiessen an den Masse-Zielort begonnen werden soll.

Das Vergiessen wird eingeleitet, wenn die Formplatte geeignet positioniert ist und alle Dosierkanäle gefüllt und bereit zum Vergiessen sind. Für glatte Massen wird der Zeitpunkt des Vergiessens zumeist mit einer Pumpbewegung in Richtung des Masse Zielorts festgelegt. Unter Druck stehende Masse breitet sich allerdings auch ohne Pumpbewegung aus und kann den Dosierkanal schon verlassen, noch bevor der optimale Zeitpunkt für das Vergiessen erreicht ist, zum Beispiel wenn noch nicht alle Dosierkanäle gefüllt sind oder die Formplatte noch nicht zum Vergiessen bereit ist. Die Möglichkeit des frühzeitigen Masseaustritts könnte zu einer unpräzisen Dosierung führen und damit zu Gewichtsungenauigkeiten der vergossenen Masse.

Das Verschlusselement ermöglicht es, den Ausflusszeitpunkt zum Ausfliessen der Masse aus den Dosierkanälen genau festzulegen und für alle Dosierkanäle zu koordinieren. Die Dosierkanäle können sukzessive oder gleichzeitig geöffnet und entleert werden.
Als Verschlusselement ist zum Beispiel ein Schieber vorgesehen, mittels dem alle Dosierkanäle gleichzeitig geschlossen und geöffnet werden können.

Gemäß der Erfindung weist die Vorrichtung mindestens einen Grundkörper mit einem Hohlraum auf, der über mindestens eine Eintrittsöffnung mit dem Massebehälter und über mindestens eine Austrittsöffnung mit dem Masse-Zielort in der Umgebung des Grundkörpers in Fluidverbindung bringbar ist. Die Eintrittsöffnung und die Austrittsöffnung sind entlang einer Giessrichtung (L) voneinander beabstandet an dem Grundkörper angeordnet. Das Dosierelement, insbesondere ein Drehschieber, ist zwischen einer ersten Position, in welcher der Dosierkanal mit der Eintrittsöffnung in Fluidverbindung steht, und einer zweiten Position, in welcher der Dosierkanal mit der Austrittsöffnung in einer Fluidverbindung steht, bewegbar. Die mindestens eine Austrittsöffnung ist mit dem Verschlusselement verschliessbar.

Dabei weisen die Dosierelemente mehrere Dosierkanäle, Eintritts- und Austrittsöffnungen auf. Bei der Bewegung des Dosierelements von der ersten in die zweite Position kann ein Dosierkanal mit einer Austrittsöffnung in Fluidverbindung treten, die nach Erreichen der zweiten Position mit einem anderen Dosierkanal in Fluidverbindung steht. Das Verschlusselement verhindert, dass in dieser Zwischenposition Masse aus dem Dosierkanal austritt. Das Verschlusselement wird erst dann geöffnet, wenn alle Dosierkanäle mit der zugehörigen Austrittsöffnung in Fluidverbindung stehen.

Vorteilhafterweise besitzt die Vorrichtung mindestens ein Pumpelement zum Ansaugen von Masse aus dem Massebehälter in den Dosierkanal und zum Ausstossen von Masse aus dem Dosierkanal.

Das Pumpelement kann direkt auf den Massebehälter wirken oder es kann mit dem Dosierelement zusammenwirken. Bevorzugt saugt das Pumpelement in einer ersten Phase Masse aus dem Massebehälter in denn Dosierkanal und presst in einer zweiten Phase die Masse aus dem Dosierkanal an den Masse-Zielort. Besonders bevorzugt besteht das Pumpelement aus einer Kolbenanordnung, die mit Dosierkanälen eines Dosierelements in Form eines Drehschiebers in Fluidverbindung bringbar ist.

Vorteilhafterweise weist die Vorrichtung eine Giessplatte mit mindestens einem Giesskanal auf, wobei der Giesskanal eine Fluidverbindung zwischen dem Dosierkanal und dem Masse-Zielort schafft. Insbesondere steht der Giesskanal in einer Fluidverbindung mit der Austrittsöffnung.

Die Giesskanäle verbinden die Ausgänge der Dosierkanäle mit den jeweiligen Masse-Zielorten und die Giessplatte bestimmt somit das Giessmuster. Giessplatten können austauschbar montiert sein, sodass das Giessmuster verändert werden kann.

Beim Vergiessen von glatten Massen verhindern die Giesskanäle ausserdem ein Nachtropfen, da überschüssige Masse durch die Kapillarwirkung wieder in den Giesskanal hochgezogen wird.

Das Nachtropfen, insbesondere von belüfteten Massen, kann ausserdem verhindert werden, wenn die Vorrichtung ein zweites Verschlusselement aufweist, mit welchem der Giesskanal gesondert verschliessbar ist.
Vorzugsweise weist die Vorrichtung einen Massebehälter auf, der mit einem Druck beaufschlagbar ist, insbesondere zur Aufnahme einer unter Druck zu haltenden Masse, wie lufthaltige Schokolade.
Die Aufgabe wird weiterhin gelöst durch ein Verfahren gemäss Anspruch 6 zum Verteilen einer fliessfähigen Masse, insbesondere eines Verzehrguts, weiter insbesondere Luftschokolade, mit einer Vorrichtung wie oben beschrieben, wobei zunächst eine, insbesondere unter Druck stehende, Masse in einem Massebehälter bereit gestellt wird. Das Verschlusselement wird in eine erste Position gebracht, so dass der Dosierkanal zumindest in Richtung Masse-Zielort verschlossen ist. Das Dosierelement wird nun in Fluidverbindung zum Massebehälter gebracht und Masse kann in den Dosierkanal fliessen. Bevorzugt sorgt ein Pumpelement dafür, dass die Masse einfliesst. Nachdem die Masse in den Dosierkanal geflossen ist, wird das Dosierelement in die zweiten Position bewegt, in welcher der Dosierkanal mit der Austrittsöffnung in einer Fluidverbindung steht. Danach wird die Austrittsöffnung mit dem Verschlusselement geöffnet, sodass die Masse aus dem Dosierkanal zu dem Masse-Zielort fliessen kann. Bevorzugt sorgt das Pumpelement dafür, dass die Masse ausfliesst. Bevorzugt fliesst die Masse aus der Austrittsöffnung durch einen Giesskanal einer Giessplatte zu dem Masse-Zielort. Das Verschlusselement verhindert das vorzeitige Einströmen von Masse in den Giesskanal, wodurch das Vergiessen präziser und damit gewichtsgenauer erfolgt.

Die Aufgabe wird ausser dem durch ein Anbauteil gemäss Anspruch 7 zum Umrüsten von Giessmaschinen mit mindestens einem Dosierelement gelöst.

Das erfindungsgemässe Anbauteil weist mindestens ein Verschlusselement auf und ist so an die Giessmaschine montierbar, dass das Verschlusselement zwischen einer ersten Position, in welcher keine Masse aus dem Dosierelement in Richtung eines Masse-Zielorts austreten kann, und einer zweiten Position, in welcher Masse aus dem Dosierelement in Richtung des Masse-Zielorts, austreten kann, stellbar ist.

Mit dem Anbauteil können herkömmliche Giessmaschinen zum Vergiessen von glatten Massen umgerüstet werden, so dass sie auch zum Vergiessen von unter Druck stehenden Massen geeignet sind.

Die Aufgabe wird auch gelöst durch ein Verfahren zum Umrüsten von Giessmaschinen mit mindestens einem Dosierelement mit einem Anbauteil wie oben beschrieben ist.

Insbesondere wird das Anbauteil an einer Giessmaschine angebracht, die einen Grundkörper mit einem Hohlraum aufweist, der über mindestens eine Eintrittsöffnung mit dem Massebehälter und über mindestens eine Austrittsöffnung mit dem Masse-Zielort in der Umgebung des Grundkörpers in Fluidverbindung bringbar ist, wobei die Eintrittsöffnung und die Austrittsöffnung entlang einer Giessrichtung (L) voneinander beabstandet an dem Grundkörper angeordnet sind, wobei das Dosierelement, insbesondere ein Drehschieber, zwischen einer ersten Position, in welcher der Dosierkanal mit der Eintrittsöffnung in Fluidverbindung steht, und einer zweiten Position, in welcher der Dosierkanal mit der Austrittsöffnung in einer Fluidverbindung steht, bewegbar ist.

Das Anbauteil wird derart angebracht, dass die mindestens eine Austrittsöffnung mit dem Verschlusselement verschliessbar ist.

Die Aufgabe wird ausserdem gelöst durch die Verwendung einer Vorrichtung wie oben beschrieben zum Vergiessen von unter Druck stehender, fliessfähigen Masse, insbesondere eines Verzehrguts, weiter insbesondere Luftschokolade.

Die Erfindung ist im Folgenden in Ausführungsbeispielem anhand von Zeichnungen näher erläutert. Es zeigen
- Figur 1: eine Schnittdarstellung einer erfindunsgemässen Vorrichtung;
- Figuren 2a-2e: schematisch den Ablauf eines Dosierzyklus anhand von Schnittdarstellungen einer erfindunsgemässen Vorrichtung.

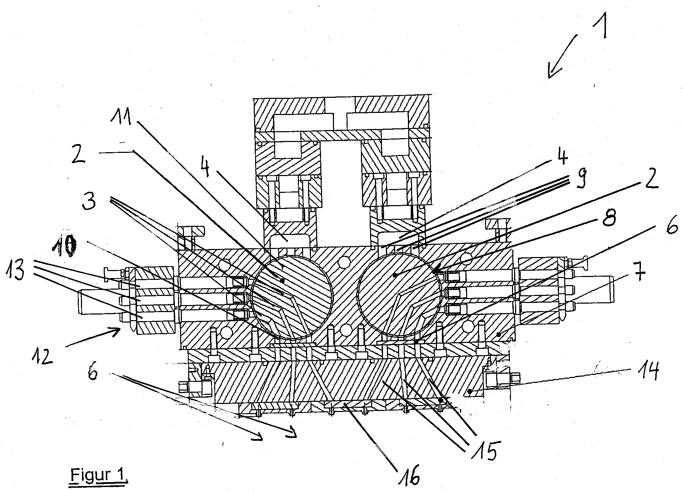

Figur 1 zeigt eine Schnittdarstellung einer erfindunsgemässen Vorrichtung 1.

Die Vorrichtung 1 weist zwei Dosierelemente 2 mit je drei Dosierkanälen 3 auf, die einerseits mit Massezufuhrkanälen 4, die in Fluidverbindung zu einem nicht explizit gezeigten Massebehälter stehen, und andererseits mit Masse-Zielorten 5 in Fluidverbindung bringbar sind.

Die Vorrichtung weist pro Dosierelement 2 ein Verschlusselement 6 auf.

Die Dosierelemente 2 sind in einen Grundkörper 7 angeordnet. Dieser besitzt pro Dosierelement einen Hohlraum 8, der über Eintrittsöffnungen 9 mit dem Massebehälter 4 und über Austrittsöffnungen 10 mit dem Masse-Zielort 5 in Fluidverbindung bringbar ist.

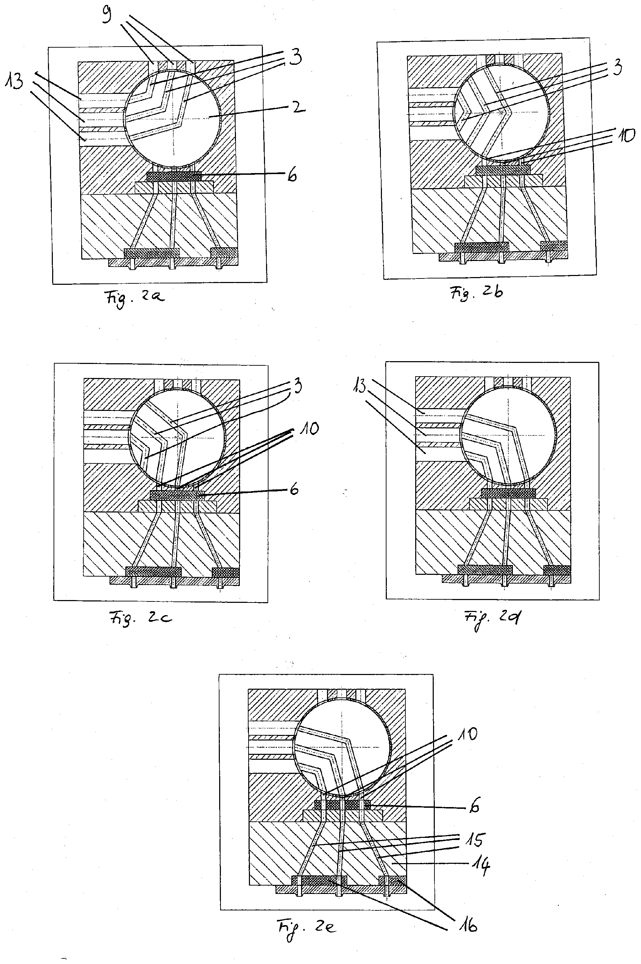

Die Dosierelemente 2 sind im gezeigten Ausführunsgbeispiel Drehschieber 11 mit einer Drehachse, die senkrecht zu der Ebene der Schnittdarstellung steht.
Die Drehschieber 11 sind zwischen einer ersten Position, in welcher die Dosierkanäle 3 jeweils mit korrespondierenden Eintrittsöffnungen 9 in Fluidverbindung stehen, und einer zweiten Position, in welcher, wie in der Figur gezeigt, die Dosierkanäle 3 jeweils mit korrespondierenden Austrittsöffnungen in einer Fluidverbindung stehen, bewegbar.
Die Austrittsöffnungen 10 sind mit dem Verschlusselement 6 verschliessbar.
Die Vorrichtung 1 weist ausserdem für jedes Dosierelement Pumpelemente 12 zum Ansaugen von Masse aus dem Massebehälter in den Dosierkanal und zum Ausstossen von Masse aus dem Dosierkanal auf.
Die Pumpelemente 12 umfassen Kolbenanordnung 13 auf, die in Fluidverbindung mit den Dosierkanälen 3 bringbar sind. Die Vorrichtung 1 ist mit einer Giessplatte 14 ausgestattet, die pro Austrittsöffnung 10 einen Giesskanal 15 aufweist. Die Giesskanäle sind mit einem weiteren Verschlusselement 16 verschließbar . Der Ablauf eines Giesszyklus wird schematisch anhand der Schnittdarstellungen in Figuren 2a-2e erläutert.
In Figur 2a stehen die Dosierkanäle 3 des Dosierelements 2 in Fluidverbindung mit den Eintrittsöffnungen 9. Die Kolbenanordnungen 13 des Pumpelements saugen Masse in die Dosierkanäle 3. Das Verschlusselement 6 ist geschlossen.

Nach dem die Dosierkanäle 3 gefüllt sind, wird das Dosierelement 2 wie in den Figure 2b und 2c gezeigt ist, gedreht. Dabei können die Dosierkanäle in Fluidverbindung mit nicht korrespondierenden Austrittsöffnungen 10 kommen.
Das verschlossenen Verschlusselement 6 verhindert aber einen Austritt von Masse aus den Dosierkänalen 3.
Der Giessvorgang darf erst beginnen, wenn jeder Dosierkanal 3 mit der korrespondierenden Austrittsöffnung 10 in Fluidverbindung steht, wie in Figur 2d gezeigt ist.
Erst dann steht auch wieder jeder Dosierkanal in Verbindung mit einer korrespondierenden Kolbenanordnung 13.
Das Verschlusselement 6 wird nun, wie in Figur 2e gezeigt, geöffnet und die Masse wird von dem Pumpelement aus den Dosierkanälen durch die Austrittsöffnungen und die Giesskanäle 15 der Giessplatte 14 in Richtung Masse-Zielort gepresst.
Die Verschlusselement 16 zum Verschliessen der Giesskanäle 15 sind nun auch geöffnet. Nach einer geeigneten Ausströmzeit werden sie verschlossen und eventuell zurückgebliebene Masse kann nicht nachtropfen.

Durch die eine Auswahl von zu öffnenden Verschlusselementen 16 kann das Giessmuster eingestellt werden. Je nach zu befüllender Formplatte wird nur ein Teil der zweiten Verschlusselemente 16 geöffnet.

## Patentansprüche

1. Vorrichtung zum Verteilen einer fliessfähigen Masse, insbesondere eines Verzehrguts, wobei die Vorrichtung aufweist:
- mindestens ein Dosierelement (2) mit mindestens einem Dosierkanal(3), der einerseits mit einem Massebehälter und andererseits mit einem Masse-Zielort (5) in Fluidverbindung bringbar ist,
- wobei die Vorrichtung mindestens einen Grundkörper (7) mit einem Hohlraum (8), der über Eintrittsöffnungen (9) mit dem Massebehälter und über Austrittsöffnungen (10) mit dem Masse-Zielort (5) in der Umgebung des Grundkörpers (7) in Fluidverbindung bringbar ist, wobei die Eintrittsöffnungen (9) und die Austrittsöffnungen (10) entlang einer Giessrichtung voneinander beabstandet an dem Grundkörper (7) angeordnet sind,
- wobei das Dosierelement (2), nämlich ein Drehschieber (11), mehrere Dosierkanäle aufweist und zwischen einer ersten Position, in welcher die Dosierkanäle (3) mit den Eintrittsöffnungen (9) in Fluidverbindung stehen, und einer zweiten Position, in welcher alle Dosierkanäle (3) mit der zugehörigen Austrittsöffnung (10) in Fluidverbindung stehen, bewegbar ist,
**dadurch gekennzeichnet, dass**
die Vorrichtung (1) mindestens ein Verschlusselement (6) aufweist, das zwischen einer ersten Position, in welcher im Wesentlichen keine Masse aus den Dosierkanälen (3) in Richtung des Masse-Zielorts (5) austreten kann, und einer zweiten Position, in welcher Masse aus den Dosierkanälen (3) in Richtung des Masse-Zielorts (5), austreten kann, stellbar ist und die Austrittsöffnungen (10) mit dem Verschlusselement (6) verschliessbar sind.

2. Vorrichtung nach ANSpruch 1, **dadurch gekennzeichnet, dass**
die Vorrichtung (1) mindestens ein Pumpelement (12), zum Ansaugen von Masse aus dem Massebehälter in den Dosierkanal (3) und zum Ausstossen von Masse aus dem Dosierkanal (3) aufweist.

3. Vorrichtung nach einem der vorhergehenden Ansprüche, **dadurch gekennzeichnet, dass**
die Vorrichtung eine Giessplatte (14) mit mindestens einem Giesskanal (15) aufweist, wobei der Giesskanal (15) eine Fluidverbindung zwischen dem Dosierkanal (3) und dem Masse-Zielort (5) schafft, insbesondere in einer Fluidverbindung mit der Austrittsöffnung (10) steht.

4. Vorrichtung nach Anspruch 3, **dadurch gekennzeichnet, dass**
die Vorrichtung (1) ein zweites Verschlusselement (16) aufweist, mit welchem der Giesskanal (14) verschliessbar ist.

5. Vorrichtung nach einem der vorhergehenden Ansprüche, **dadurch gekennzeichnet, dass**
die Vorrichtung (1) einen Massebehälter aufweist, der mit einem Druck beaufschlagbar ist, insbesondere zur Aufnahme einer unter Druck zu haltenden Masse, wie lufthaltige Schokolade.

6. Verfahren zum Verteilen einer fliessfähigen Masse, insbesondere eines Verzehrguts, weiter insbesondere Luftschokolade, mit einer Vorrichtung gemäss Ansprüchen 1-5, **gekennzeichnet durch** die folgenden Schritte
- Bereitstellen einer, insbesondere unter Druck stehenden, Masse in einem Massebehälter;
- Verschlusselement (6) in erste Position bringen, so dass die Dosierkanäle (3) zumindest in Richtung Masse-Zielort (5) verschlossen sind;
- Dosierkanäle (3) in Fluidverbindung zum Massebehälter bringen;
- Dosierelement (2) in eine zweiten Position, in welcher die Dosierkanäle (3) mit der Austrittsöffnung (10) in einer Fluidverbindung steht, bewegen, nachdem Masse in die Dosierkanäle (3) geflossen ist;
- Austrittsöffnungen (10) mit Verschlusselement (6) öffnen, wenn alle Dosierkanäle mit der zugehörigen Austrittsöffnung in Fluidverbindung stehen.

7. Anbauteil zum Umrüsten von Giessmaschinen mit mindestens einem Dosierelement, **dadurch gekennzeichnet, dass**
das Anbauteil mindestens ein Verschlusselement (6) aufweist und so an die Giessmaschine montierbar ist, dass das Verschlusselement (6) zwischen einer ersten Position, in welcher keine Masse aus dem Dosierelement (2) in Richtung eines Masse-Zielorts (5) austreten kann, und einer zweiten Position, in welcher Masse aus dem Dosierelement (2) in Richtung des Masse-Zielorts (5), austreten kann, stellbar ist, wobei als Verschlusselement ein Schieber vorgesehen ist.

8. Verfahren zum Umrüsten von Giessmaschinen mit mindestens einem Dosierelement, **dadurch gekennzeichnet, dass**
ein Anbauteil gemäss Anspruch 7 an der Giessmaschinen angebracht wird, insbesondere an einen Grundkörper (7) mit einem Hohlraum (8), der über mindestens eine Eintrittsöffnung (9) mit dem Massebehälter und über mindestens eine Austrittsöffnung (10) mit dem Masse-Zielort (5) in der Umgebung des Grundkörpers (7) in Fluidverbindung bringbar ist, wobei die Eintrittsöffnung (9) und die Austrittsöffnung (10) entlang einer Giessrichtung voneinander beabstandet an dem Grundkörper (7) angeordnet sind, wobei das Dosierelement (2), insbesondere ein Drehschieber (11), zwischen einer ersten Position, in welcher der Dosierkanal (3) mit der Eintrittsöffnung (9) in Fluidverbindung steht, und einer zweiten Position, in welcher der Dosierkanal (3) mit der Austrittsöffnung (10) in einer Fluidverbindung steht, bewegbar ist,
wobei das Anbauteil derart angebracht wird, dass die mindestens eine Austrittsöffnung (10) mit dem Verschlusselement (6) verschliessbar ist.

9. Verwendung einer Vorrichtung (1) gemäss Ansprüchen 1-5 zum Vergiessen von unter Druck stehender, fliessfähiger Masse, insbesondere eines Verzehrguts, weiter insbesondere von Luftschokolade.

## Claims

1. Device for distributing a flowable substance, in particular a consumable product, wherein the device has:
- at least one metering element (2), having at least one metering channel (3), which latter can be brought into fluidic connection, on the one hand, with a substance container and, on the other hand, with a substance destination (5),
- wherein the device at least one main body (7), having a cavity (8) which can be brought into fluidic connection with the substance container via intake openings (9) and with the substance destination (5), in the environment of the main body (7), via discharge openings (10), wherein the intake openings (9) and the discharge openings (10) are arranged on the main body (7) at a distance apart in a casting direction,
- wherein the metering element (2), namely a rotary slide valve (11), has a plurality of metering channels and is movable between a first position, in which the metering channels (3) are fluidically connected to the intake openings (9), and a second position, in which all the metering channels (3) are fluidically connected to the associated discharge opening (10),
**characterized in that** the device (1) has at least one closure element (6), which is settable between a first position, in which substantially no substance can exit the metering channels (3) in the direction of the substance destination (5), and a second position, in which substance can exit the metering channels (3) in the direction of the substance destination (5), and the discharge openings (10) are closable with the closure element (6).

2. Device according to Claim 1, **characterized in that** the device (1) has at least one pumping element (12), for drawing substance out of the substance container into the metering channel (3) and for ejecting substance from the metering channel (3).

3. Device according to either of the preceding claims, **characterized in that** the device has a casting plate (14) having at least one casting channel (15), wherein the casting channel (15) creates a fluidic connection between the metering channel (3) and the substance destination (5), in particular is fluidically connected to the discharge opening (10).

4. Device according to Claim 3, **characterized in that** the device (1) has a second closure element (16), with which the casting channel (14) is closable.

5. Device according to one of the preceding claims, **characterized in that** the device (1) has a substance container which can be pressurized, in particular for the reception of a substance to be kept under pressure, such as air-containing chocolate.

6. Method for distributing a flowable substance, in particular a consumable product, more particularly aerated chocolate, with a device according to Claims 1-5, **characterized by** the following steps:
- provision of a substance, in particular a pressurized substance, in a substance container;
- bringing of the closure element (6) into a first position, so that the metering channels (3), at least in the direction of the substance destination (5), are closed;
- bringing of the metering channels (3) into fluidic connection with the substance container;
- movement of the metering element (2) into a second position, in which the metering channels (3) are fluidically connected to the discharge opening (10), after substance has flowed into the metering channels (3);
- opening of the discharge openings (10) with the closure element (6) when all the metering channels are fluidically connected to the associated discharge opening.

7. Attachment part for converting casting machines having at least one metering element, **characterized in that** the attachment part has at least one closure element (6) and can be mounted onto the casting machine such that the closure element (6) is settable between a first position, in which no substance can exit the metering element (2) in the direction of a substance destination (5), and a second position, in which substance can exit the metering element (2) in the direction of the substance destination (5), wherein a slide valve is provided as the closure element.

8. Method for converting casting machines having at least one metering element, **characterized in that** an attachment part according to Claim 7 is fitted to the casting machine, in particular to a main body (7) having a cavity (8) which can be brought into fluidic connection with the substance container via at least one intake opening (9), and with the substance destination (5), in the environment of the main body (7), via at least one discharge opening (10), wherein the intake opening (9) and the discharge opening (10) are arranged on the main body (7) at a distance apart in a casting direction, wherein the metering element (2), in particular a rotary slide valve (11), is movable between a first position, in which the metering channel (3) is fluidically connected to the intake opening (9), and a second position, in which the metering channel (3) is fluidically connected to the discharge opening (10),
wherein the attachment part is fitted in such a way that the at least one discharge opening (10) is closable with the closure element (6).

9. Use of a device (1) according to Claims 1-5 for casting pressurized, flowable substance, in particular a consumable product, more particularly aerated chocolate.

## Revendications

1. Ensemble de répartition d'une pâte fluide, en particulier d'un produit de consommation, l'ensemble présentant :
au moins un élément de dosage (2) doté d'au moins un canal de dosage (3) qui peut être relié à écoulement d'une part à un récipient de pâte et d'autre part à un emplacement (5) de destination de la pâte,
dans lequel l'ensemble au moins un corps de base (7) doté d'une cavité (8) qui peut par l'intermédiaire d'ouvertures d'entrée (9) être amenée en communication d'écoulement avec le récipient à pâte et par l'intermédiaire d'ouvertures de sortie (10) avec le l'emplacement (5) de destination de la pâte situé dans l'environnement du corps de base (7), les ouvertures d'entrée (9) et les ouvertures de sortie (10) étant disposées sur le corps de base (7) à distance les unes des autres dans une direction de coulée,
l'élément de dosage (2), à savoir un coulisseau rotatif (11), présentant plusieurs canaux de dosage et pouvant être déplacé entre une première position dans laquelle les canaux de dosage (3) sont placés en communication d'écoulement avec les ouvertures d'entrée (9) et une deuxième position dans laquelle tous les canaux de dosage (3) sont placés en communication d'écoulement avec l'ouverture de sortie (10) associée, **caractérisé en ce que**
l'ensemble (1) présente au moins un élément de fermeture (6) qui peut être déplacé entre une première position dans laquelle essentiellement aucune pâte ne peut sortir des canaux de dosage (3) en direction de l'emplacement (5) de destination de la pâte et une deuxième position dans laquelle de la pâte peut sortir des canaux de dosage (3) en direction du l'emplacement (5) de destination de la pâte et
**en ce que** les ouvertures de sortie (10) peuvent être fermés par l'élément de fermeture (6).

2. Ensemble selon la revendication 1, **caractérisé en ce que** l'ensemble (1) présente au moins un élément de pompe (12) qui aspire la pâte du récipient à pâte jusque dans le canal de dosage (3) et qui refoule la pâte hors du canal de dosage (3).

3. Ensemble selon l'une des revendications précédentes, **caractérisé en ce que** l'ensemble présente une plaque de coulée (14) dotée d'au moins un canal de coulée (15), le canal de coulée (15) créant une liaison d'écoulement entre le canal de dosage (3) et l'emplacement (5) de destination de la pâte et étant en particulier en liaison d'écoulement avec l'ouverture de sortie (10).

4. Ensemble selon la revendication 3, **caractérisé en ce que** l'ensemble (1) présente un deuxième élément de fermeture (16) qui permet de fermer le canal de coulée (14) .

5. Ensemble selon l'une des revendications précédentes, **caractérisé en ce que** l'ensemble (1) présente un récipient à pâte sur lequel une pression peut être appliquée, en particulier pour recevoir une pâte à maintenir sous pression, par exemple de la chocolat aéré.

6. Procédé de répartition d'une pâte fluide, en particulier d'un produit de consommation, et en particulier de la chocolat aéré, à l'aide d'un ensemble selon les revendications 1 à 5, **caractérisé par** les étapes suivantes :
préparation d'une pâte, en particulier placée sous pression, dans un récipient à pâte,
placement d'un élément de fermeture (6) dans une première position de telle sorte que les canaux de dosage (3) soient fermés au moins en direction du l'emplacement (5) de destination de la pâte,
placement des canaux de dosage (3) en communication d'écoulement avec le récipient à pâte,
placement de l'élément de dosage (2) dans une deuxième position dans laquelle les canaux de dosage (3) sont mis en communication d'écoulement avec l'ouverture de sortie (10), suite à quoi la pâte est amenée à s'écouler dans les canaux de dosage (3) et
ouverture des ouvertures de sortie (10) à l'aide de l'élément de fermeture (6) si tous les canaux de dosage sont en communication d'écoulement avec l'ouverture de sortie associée.

7. Composant à monter pour transformer des machines de coulée présentant au moins un élément de dosage, **caractérisé en ce que** le composant présente au moins un l'élément de fermeture (6) et peut être monté sur la machine de coulée, **en ce que** l'élément de fermeture (6) peut être déplacé entre une première position dans laquelle essentiellement aucune pâte ne peut sortir des canaux de dosage (3) en direction de l'emplacement (5) de destination de la pâte et une deuxième position dans laquelle de la pâte peut sortir des canaux de dosage (3) en direction du l'emplacement (5) de destination de la pâte, un coulisseau étant prévu comme élément de fermeture.

8. Procédé de transformation de machines de coulée présentant au moins un élément de dosage, **caractérisé en ce qu'**un composant selon la revendication 7 est placé sur les machines de coulée, en particulier sur un corps de base (7) doté d'une cavité (8) qui peut par l'intermédiaire d'au moins une ouverture d'entrée (9) être amenée en communication d'écoulement avec le récipient à pâte et par l'intermédiaire d'au moins une ouverture de sortie (10) avec l'emplacement (5) de destination de la pâte situé dans l'environnement du corps de base (7), l'ouverture d'entrée (9) et l'ouverture de sortie (10) étant disposées sur le corps de base (7) à distance l'unes de l'autre dans une direction de coulée, l'élément de dosage (2), à savoir un coulisseau rotatif (11), présentant plusieurs canaux de dosage et pouvant être déplacé entre une première position dans laquelle les canaux de dosage (3) sont placés en communication d'écoulement avec l'ouverture d'entrée (9) et une deuxième position dans laquelle tous le canal de dosage (3) est placé en communication d'écoulement avec l'ouverture de sortie (10) associée, le composant à monter étant placé de telle sorte que la ou les ouvertures de sortie (10) puissent être fermées à l'aide de l'élément de fermeture (6).

9. Utilisation d'un ensemble (1) selon les revendications 1 à 5 pour couler une pâte fluide placée sous pression, en particulier un produit de consommation, et de façon encore plus particulière de de chocolat aéré.
